# EUROPEAN PATENT APPLICATION

(11) **EP 4 575 735 A1**
(43) Date of publication of application: **25.06.2025**
(21) Application number: 23856322.5
(22) Date of filing: 03.07.2023
(51) Int. Cl.: G06F 3/0484, G06F 3/04845, G06F 3/0488, G06F 3/04883

(54) **METHOD AND APPARATUS FOR TAKING A SCREENSHOT, AND STORAGE MEDIUM AND TERMINAL**

(30) Priority: 26.08.2022 CN 202211038078
(71) Applicant: GUANGDONG OPPO MOBILE TELECOMMUNICATIONS CORP., LTD., Dongguan, Guangdong 523860 (CN)
(72) Inventor: JIAO, Shiyu, Dongguan, Guangdong 523860 (CN)
(74) Representative: Novagraaf Technologies
(86) International application number: PCT/CN2023/105578
(87) International publication number: WO 2024/041232

(57) **Abstract**

A method for taking a screenshot is performed by a terminal. In a case that the terminal is displaying contents in split-screens, a screen interface of the terminal is divided into N split-screen interfaces by at least one split-screen line, and the N is a positive integer greater than 1, the method includes: receiving, in the case that the terminal is displaying contents in split-screens, a screenshot-taking operation performed on a screen for a first target split-screen interface, wherein the first target split-screen interface comprises at least one split-screen interface; generating, in response to the screenshot-taking operation, a screenshot image corresponding to the screenshot-taking operation, wherein the screenshot image comprises contents displayed in the first target split-screen interface.

## Description

The present application claims the priority of the Chinese patent application No. 202211038078.3, filed on August 26, 2022, in the title of "METHOD AND APPARATUS FOR TAKING SCREENSHOT, STORAGE MEDIUM, AND TERMINAL", and contents of which are incorporated herein by its entireties.

### TECHNICAL FIELD

The present disclosure relates to the field of communication, and in particular to a method and an apparatus for taking a screenshot, a storage medium, and a terminal.

### BACKGROUND

As scientific technology develops, terminals are used more widely in daily lives, and functions of the terminals are increasingly abundant. Taking a screenshot is a basic function of many terminals in the art. By taking the screenshot, contents displayed on a screen of the terminal can be intercepted and saved in a form of an image, such that a screenshot of a terminal interface is obtained. The image obtained by taking the screenshot is a screenshot of the entire interface on the screen.

### SUMMARY OF THE DISCLOSURE

The present disclosure provides a method and an apparatus for taking a screenshot, a storage medium, and a terminal, and according to the present disclosure, the terminal may take the screenshot conveniently when the terminal display contents in split screens.

In a first aspect, the present disclosure provides a method for taking a screenshot, performed by a terminal. In a case that the terminal is displaying contents in split-screens, a screen interface of the terminal is divided into N split-screen interfaces by at least one split-screen line, and the N is a positive integer greater than 1, the method includes: receiving, in the case that the terminal is displaying contents in split-screens, a screenshot-taking operation performed on a screen for a first target split-screen interface, wherein the first target split-screen interface comprises at least one split-screen interface; generating, in response to the screenshot-taking operation, a screenshot image corresponding to the screenshot-taking operation, wherein the screenshot image comprises contents displayed in the first target split-screen interface.

In a second aspect, the present disclosure provides an apparatus for taking a screenshot, configured in a terminal. In a case that the terminal is displaying contents in split-screens, a screen interface of the terminal is divided into N split-screen interfaces by at least one split-screen line, and the N is a positive integer greater than 1, the apparatus includes: an operation receiving module, configured to receive, in the case that the terminal is displaying contents in split-screens, a screenshot-taking operation performed on a screen for a first target split-screen interface, wherein the first target split-screen interface comprises at least one split-screen interface; and a screenshot responding module, configured to generate, in response to the screenshot-taking operation, a screenshot image corresponding to the screenshot-taking operation, wherein the screenshot image comprises contents displayed in the first target split-screen interface.

In a third aspect, the present disclosure provides a computer storage medium, storing a plurality of instructions. The plurality of instructions are configured to be loaded by a processor to perform operations of the method in the above aspect.

In a fourth aspect, the present disclosure provides a terminal, including a memory, a processor and a computer program stored on the memory and capable of being run on the processor. The processor is configured to execute the computer program to perform the operations of the method in the above aspect.

### BRIEF DESCRIPTION OF THE DRAWINGS

In order to more clearly illustrate technical solutions in the embodiments of the present disclosure or in the art, the accompanying drawings that are used for describing the embodiments or the art are briefly introduced in the following. Apparently, the accompanying drawings show only some of the embodiments of the present disclosure, and any ordinary skilled person in the art may obtain other accompanying drawings according to the following drawings without making any creative work.
FIG. 1 is a system architecture of a method for taking a screenshot according to an embodiment of the present disclosure.
FIG. 2 is a flow chart of the method for taking a screenshot according to an embodiment of the present disclosure.
FIG. 3 is a schematic view of contents being displayed in split screens according to an embodiment of the present disclosure.
FIG. 4 is a schematic view of performing a screenshot-taking operation according to an embodiment of the present disclosure.
FIG. 5 is a schematic view of an image of a taken screenshot according to an embodiment of the present disclosure.
FIG. 6 is a schematic view of another image of the taken screenshot according to an embodiment of the present disclosure.
FIG. 7 is a flow chart of a method for taking a screenshot according to another embodiment of the present disclosure.
FIG. 8 is a schematic view of performing a screenshot-taking operation according to another embodiment of the present disclosure.
FIG. 9 is a flow chart of a method for taking a screenshot according to still another embodiment of the present disclosure.
FIG. 10 is a schematic view of thumbnails according to another embodiment of the present disclosure.
FIG. 11 is a schematic view of dragging the thumbnails according to another embodiment of the present disclosure.
FIG. 12 is a schematic view of dragging the thumbnails according to another embodiment of the present disclosure.
FIG. 13 is a schematic view of dragging the thumbnails according to another embodiment of the present disclosure.
FIG. 14 is a schematic view of dragging the thumbnails according to another embodiment of the present disclosure.
FIG. 15 is a structural schematic diagram of an apparatus for taking a screenshot according to another embodiment of the present disclosure.
FIG. 16 is a structural schematic diagram of a terminal according to another embodiment of the present disclosure.

### DETAILED DESCRIPTION

In order to make features and advantages of the embodiments of the present disclosure more obvious and understandable, technical solutions in the embodiments of the present disclosure will be described clearly and completely in the following by referring to the accompanying drawings in the embodiments of the present disclosure. Apparently, the described embodiments are only a part of, not all of, the embodiments of the present disclosure. All other embodiments, which are obtained by any ordinary skilled person in the art based on the embodiments of the present disclosure without making creative work, shall fall within the scope of the present disclosure.

When the following description relates to the accompanying drawings, same numerals in various accompanying drawings indicate same or similar elements unless otherwise indicated. Implementations described in the following exemplary embodiments do not represent all embodiments consistent with the present disclosure. Rather, the implementations are only examples of apparatuses and methods consistent with some aspects of the present disclosure as limited in the appended claims.

Taking screenshots is a basic function of many terminals in the art. By taking a screenshot, contents displayed on a screen of a terminal can be intercepted and saved in a form of an image, such that a screenshot of an interface of the terminal is obtained. An image obtained by taking the screenshot is a screenshot of an interface of the entire screen.

In the art, some terminals can display contents in split screens, and when displaying contents in split screens, the screen of the terminal can display interfaces of different applications at the same time. For example, when the interface of the screen of the terminal is divided into an upper split-screen interface and a lower split-screen interface. One of the upper split-screen interface and the lower split-screen interface displays an interface of an application a, and the other one of the upper split-screen interface and the lower split-screen interface displays an interface of an application b.

When the terminal displays contents in split screens, and when a screenshot of one split-screen interface needs to be taken, a screenshot of the entire screen interface needs to be taken firstly, obtaining a screenshot of the entire screen interface; and subsequently, an image editing tool is to be used to crop the screenshot of the entire screen interface to obtain the screenshot of one split-screen interface.

Therefore, a method for taking a screenshot for split screens in the related art is complicated, has a large number of operation to be performed, and consumes a long period of time, resulting in a low screenshot taking efficiency.

In order to solve the above technical problems in the related art, the present disclosure provides a method of taking a screenshot. Firstly, in a case that the terminal displays contents in split screens, a screenshot-taking operation performed on a first target split-screen interface of the screen is received. The first target split-screen interface includes at least one split-screen interface. A screenshot image of the screenshot-taking operation is generated in response to the screenshot-taking operation. The screenshot image includes contents displayed in the first target split-screen interface. Since one or more split-screen interfaces that need to be taken for screenshots can be determined based on the screenshot-taking operation performed on the screen, screenshots for each of one or more split-screen interfaces can be taken without cropping the screenshot of the entire screen of the terminal. In this way, when the terminal is displaying contents in split screens, the screenshot can be taken conveniently, and the screenshot taking efficiency is improved.

The present disclosure provides a method for taking a screenshot, performed by a terminal. In a case that the terminal is displaying contents in split screens, one screen interface is divided into N split-screen interfaces by at least one split-screen line. The N is a positive integer greater than 1. The method includes the following.

In the case that the terminal is displaying contents in split screens, a screenshot-taking operation performed on a first target split-screen interface of the screen is received, and the first target split-screen interface includes at least one split-screen interface.

In response to the screenshot-taking operation, a screenshot image corresponding to the screenshot-taking operation is generated. The screenshot images includes contents displayed in the first target split-screen interface.

In an embodiment, receiving the screenshot-taking operation performed on the first target split-screen interface of the screen includes: receiving the screenshot-taking operation performed on the screen, determining the first target split-screen interface corresponding to the screenshot-taking operation performed on the screen. Generating the screenshot image corresponding to the screenshot-taking operation includes: intercepting the contents displayed in the first target split-screen interface to generate the screenshot image corresponding to the screenshot-taking operation.

In an embodiment, before finishing the screenshot-taking operation, the further includes the following.

The first target split-screen interface is displayed in the screen interface in a predetermined identification manner.

In an embodiment, determining the first target split-screen interface corresponding to the screenshot-taking operation performed on the screen includes the following.

An operation action region of the screen interface corresponding to the screenshot-taking operation is obtained. The operation action region includes at least one of: an action region of a starting point of the screenshot-taking operation; an action region of an end point of the screenshot-taking operation; an action region of a trajectory of the screenshot-taking operation.

The first target split-screen interface in the screen interface corresponding to the screenshot-taking operation is determined based on the operation action region.

In an embodiment, determining, based on the operation action region, the first target split-screen interface in the screen interface corresponding to the screenshot-taking operation includes the following.

In each split-screen interface, a sub-split-screen interface, which is formed by a display region overlapping with the operation action region, is determined based on the operation action region and the display region of each split-screen interface in the screen interface.

An integral split-screen interface, which is formed by sub-split-screen interfaces of all split-screen interfaces, serves as the first target split-screen interface corresponding to the screenshot-taking operation performed in the screen interface.

In an embodiment, the display region of each split-screen interface is defined by each split-screen line in the screen interface and an interface boundary of the screen interface.

Alternatively, the display region of each split-screen interface is defined by each split-screen line in the screen interface, an anti-false-touch region, and an interface boundary of the screen interface. The anti-false-touch region is region located within a predetermined distance from the split-screen line.

In an embodiment, when a floating window interface exists above a layer where the first target split-screen interface is displayed, the screenshot image includes contents displayed in a region which is at least a part of a superimposing region formed by superimposing the first target split-screen interface with the floating window interface and located within the first target split-screen interface.

In an embodiment, after generating the screenshot image of the screenshot-taking operation, the method further includes:

A thumbnail of the screenshot image is displayed at a predetermined position above the layer on which the first target split-screen interface is displayed.

A dragging operation performed on the thumbnail is received.

In response to the dragging operation, the thumbnail is displayed based on a position of the dragging operation, such that the thumbnail moves following the position of the dragging operation.

A target operation is performed on the screenshot image when the dragging operation is stopped.

In an embodiment, performing the target operation on the screenshot image when the dragging operation being stopped includes the following.

It is determined whether the thumbnail is at a predetermined position when the dragging operation is monitored as being stopped.

When the thumbnail is at the predetermined position, the thumbnail of the screenshot image remains being displayed at the predetermined position.

When the thumbnail is not at the predetermined position, the target picture operation is performed on the screenshot image.

In an embodiment, performing the target picture operation on the screenshot image includes the following.

A corresponding second target split-screen interface when the dragging operation is stopped, and a target application corresponding to the second target split-screen interface are determined.

When the target application is an application supporting image processing, a target image operation is performed on the screenshot image based on the target application, displaying the thumbnail of the screenshot image is canceled. The target image operation includes, but is not limited to: sending the screenshot image, editing the screenshot image, and storing the screenshot image.

When target application is an application that does not support the image processing, a prompt message is provided, and the thumbnail of the screenshot image remains being displayed at the predetermined position. The prompt message is configured used to prompt that the target application does not support the image processing.

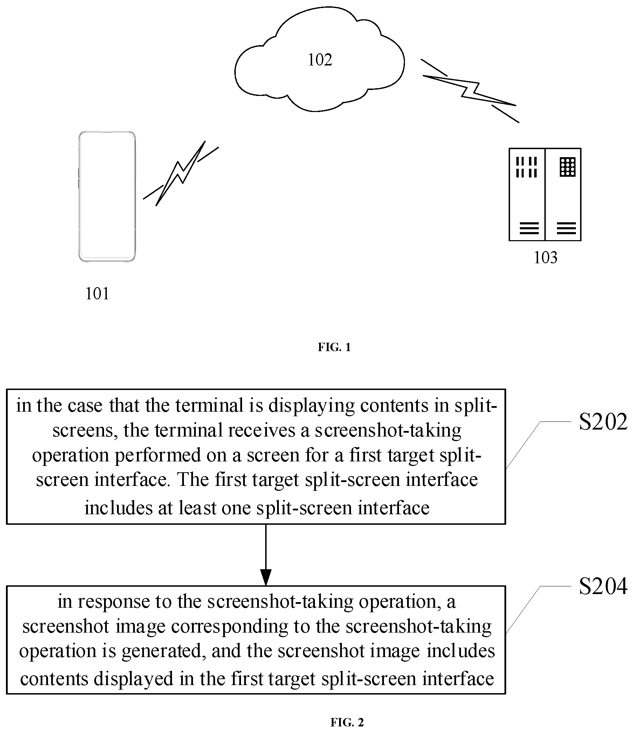

As shown in FIG. 1, FIG. 1 is a system architecture of a method for taking a screenshot according to an embodiment of the present disclosure.

As shown in FIG. 1, the system architecture includes a terminal 101, a network 102, and a server 103. The network 102 is configured to provide a medium for a communication link between the terminal 101 and the server 103.The network 102 includes various types of wired communication links or wireless communication links. For example, the wired communication links include fiber optics, twisted pairs, or coaxial cables; and the wireless communication links include Bluetooth communication links, Wireless-Fidelity (Wi-Fi) communication links, or microwave communication links, and so on.

The terminal 101 may interact with the server 103 via the network 102 to receive messages from or send messages to the server 103. Alternatively, the terminal 101 may interact with the server 103 via the network 102 to receive messages or data sent to the server 103 from other users. The terminal 101 may be hardware or software. When the terminal 101 is hardware, the terminal may be any electronic device including, but not limited to, a smartwatch, a smartphone, a tablet computer, a laptop portable computer, and a desktop computer. When the terminal 101 is software, the terminal 101 may be installed in the electronic device listed in the above and may be realized as a plurality of software or software modules (such as, being used to provide distributed services) or as a single software or software module. The present disclosure does not limit the above structures.

In an embodiment of the present disclosure, in the case that the terminal is displaying contents in split-screens, the terminal 101 firstly receive a screenshot-taking operation performed on a screen for a first target split-screen interface. The first target split-screen interface includes at least one split-screen interface. The terminal 101 then, in response to the screenshot-taking operation, generates a screenshot image corresponding to the screenshot-taking operation. The screenshot image includes display contents displayed within the first target split-screen interface.

The server 103 may be a business server providing various services. It is noted that the server 103 may be hardware or software. When the server 103 is hardware, the server 103 may be configured as a distributed server cluster formed by a plurality of servers or configured as a single server. When the server 103 is software, the server 103 may be configured as a plurality of software or software modules (such as, being used to provide distributed services); or the server 103 may be configured as a single software or software module. The present disclosure does not limit the structure of the server.

Alternatively, the system architecture may not include the server 103, in other words, the server 103 is only optional in the embodiments of the present disclosure. That is, the method provided in the embodiments of the present disclosure may be applied in the system architecture that includes only the terminal 101. The present application does not limit structures of the system architecture.

It should be understood that the numbers of terminals, networks, and servers in FIG. 1 are only schematic, and may be any number as needed in practice.

As shown in FIG. 2, FIG. 2 is a flow chart of the method for taking the screenshot according to an embodiment of the present disclosure. A subject performing the embodiment of the present disclosure may be the terminal performing the method for taking the screenshot; or a processor in the terminal performing the method for taking the screenshot; or a screen-staking service in the terminal performing the method for taking the screenshot. For convenience of description, in the following, a specific execution process of the method for taking the screenshot will be described in detail in an example where the processor in the terminal is the subject for performing the method for taking the screenshot.

As shown in FIG. 2, the method for taking the screenshot includes at least the following.

S202, in the case that the terminal is displaying contents in split-screens, the terminal receives a screenshot-taking operation performed on a screen for a first target split-screen interface. The first target split-screen interface includes at least one split-screen interface.

It is understood that displaying contents in split-screens in the present disclosure refers to one screen interface of a screen in the terminal can display a plurality of split-screen interfaces. Specifically, the screen interface can be divided into N split-screen interfaces by at least one split-screen line (virtual line). The N is a positive integer greater than 1. That is, the screen interface can be divided into at least 2 split-screen interfaces by at least one split-screen line, and each of the 2 split-screen interfaces displays an application interface of one application.

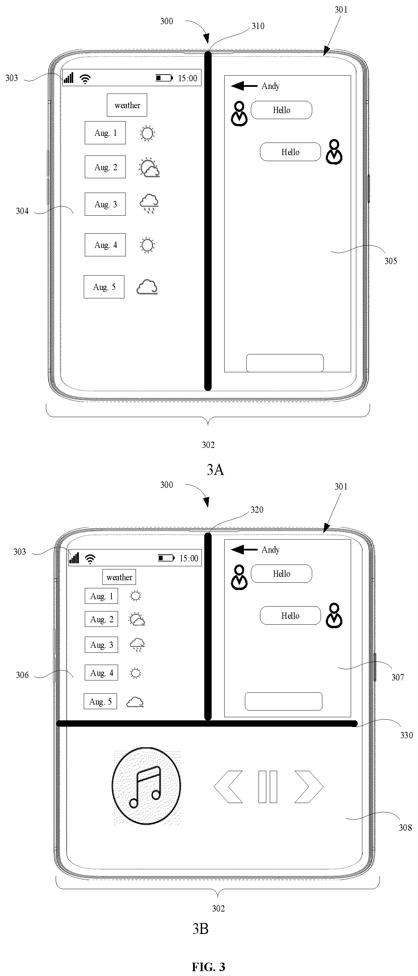

As shown in FIG. 3, FIG. 3 is a schematic view of contents being displayed in split screens according to an embodiment of the present disclosure. As shown in FIG. 3, in the case that the terminal 300 is displaying contents in the split-screens, the screen interface 302 of the screen 301 displays a plurality of applications simultaneously. The plurality of applications include: social applications (such as WeChat, QQ, and so on), text editing applications (such as sticky notes, memos, and so on), image management applications (such as photo albums), map applications (such as Baidu Map, Google Map, and so on), browser applications (scuh as Safair, GoogleChrome, and so on), music applications (such as QQ Music, NetEase Cloud Music, and so on), and so on.

Further, in the case that the terminal 300 is displaying contents in split-screens, split-screens shown on the screen interface 302 in the terminal 300 may be formed in following two manners. In a first manner, split-screen lines for forming the split-screen interfaces do not have an intersection (the split-screen lines are parallel to each other). As shown in FIG. 3A, the screen interface 302 in the terminal 300 displays two split-screen interfaces, which are a first split-screen interface 304 and a second split-screen interface 305. The first split-screen interface 304 and the second split-screen interface 305 are formed by the split-screen line 310 and an interface boundary of the screen interface 302. The first split-screen interface 304 displays an application interface of a weather application and a status bar 303. The status bar 303 includes a signal type, a signal strength, a time, a WI-FI icon, a current remaining power level, and so on. The second split-screen interface 305 displays a chat window interface of a social application.

In the second manner, the split-screen lines for forming the split-screen interfaces have at least one intersection. As shown in FIG. 3B, the screen interface 302 in the terminal 300 has three split-screen interfaces, and two of the three split-screen interfaces are a first split-screen interface 306, a second split-screen interface 307, and a third split-screen interface 308. The first split-screen interface 306 and the second split-screen interface 307 are formed by a split-screen line 320 and the interface boundary of the screen interface 302. The third split-screen interface 308 is separated from the first split-screen interface 306 and the second split-screen interface 307 by a split-screen line 330 and is formed by the split-screen line 330 and the interface boundary 302 of the screen interface. The split-screen line 320 and the split-screen line 330 form an intersection. The first split-screen interface 306 displays the application interface of the weather application and the status bar 303. The second split-screen interface 307 displays the chat window interface of the social application. The third split-screen interface 308 displays an application interface of a music application. A scenario shown in FIG. 3B is more commonly seen in embodiments where the terminal 300 has a larger screen 301, for example, where the terminal 300 is a foldable mobile phone, a tablet computer, a computer, a television, and so on.

In the case that the terminal is displaying contents in the split-screens, when the user needs to obtain a screenshot image of one or more split-screen interfaces in the screen interface, the user may perform the screenshot-taking operation for the first target split-screen interface in the screen interface. The first target split-screen interface includes at least one split-screen interface in the screen interface, and that is, the first target split-screen interface includes one or more split-screen interfaces. In this way, the processor in the terminal receives the screenshot-taking operation performed on the screen. The screenshot-taking operation may be a touch operation performed on the screen. For example, the screenshot-taking operation may be a finger (including a knuckle) tapping operation performed on the screen or a finger sliding or grasping operation performed on the screen. In the embodiments of the present disclosure, the screenshot-taking operation is described as a touch operation performed by three fingers sliding on a screen region corresponding to one or more split-screen interfaces.

Specifically, since the screenshot-taking operation performed on the screen is an operation input by the user for the first target split-screen interface, after the processor receives the screenshot-taking operation performed on the screen, the processor determines the first target split-screen interface in the screen interface corresponding to the screenshot-taking operation.

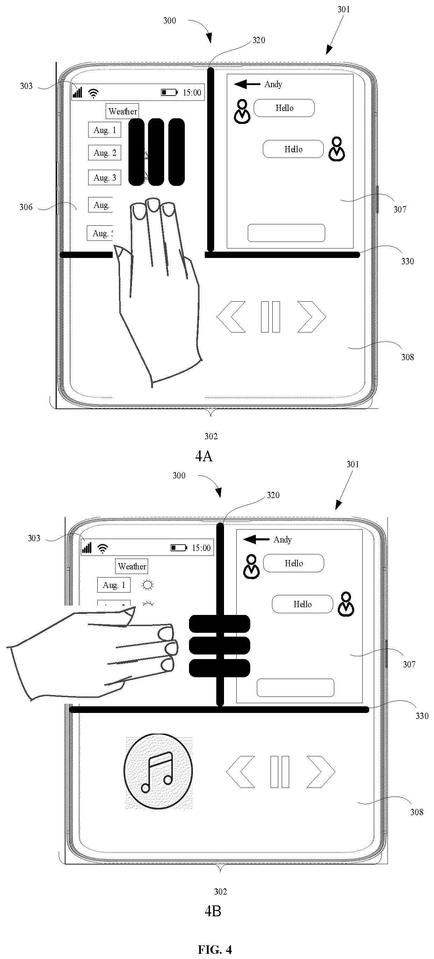

As shown in FIG. 4, FIG. 4 is a schematic view of performing the screenshot-taking operation according to an embodiment of the present disclosure. As shown in FIG. 4A, based on the split-screen interfaces in FIG. 3B, the user takes three fingers to slide on a screen region corresponding to the first split-screen interface 306, equivalent to inputting the screenshot-taking operation on the screen for the first split-screen interface 306. The processor in the terminal receives the screenshot-taking operation inputted on the screen for the first split-screen interface 306 and determines the first split-screen interface 306 as the first target split-screen interface corresponding to the screenshot-taking operation. As shown in FIG. 4B, based on the split-screen interface in FIG. 3B, the user takes the three fingers to slide continuously on a screen region corresponding to the first split-screen interface 306 and the second split-screen interface 307, equivalent to inputting the screenshot-taking operation on the screen for the first split-screen interface 306 the second split-screen interface 307. In this way, the processor in the terminal receives the screenshot-taking operation inputted on the screen for the first split-screen interface 306 second split-screen interface 307 and determines the first split-screen interface 306 and the second split-screen interface 307 are the first target split-screen interface corresponding to the screenshot-taking operation.

S204, in response to the screenshot-taking operation, a screenshot image corresponding to the screenshot-taking operation is generated, and the screenshot image includes contents displayed in the first target split-screen interface.

Since each split-screen interface in the screen interface is configured to display the application interface of the respective application, after determining the first target split-screen interface corresponding to the screenshot-taking operation, an interface boundary of the first target split-screen interface can be determined in response to the screenshot-taking operation. The interface boundary of the first target split-screen interface is an interface boundary of an integral split-screen interface formed by combining all split-screen interfaces included in the first target split-screen interface, and the contents displayed in the first target split-screen interface are intercepted according to the interface boundary of the first target split-screen interface. That is, the screenshot image corresponding to the screenshot-taking operation is generated, and the contents displayed in the first target split-screen interface are contents displayed in the integral split-screen interface formed by combining all split-screen interfaces included in the first target split-screen interface.

In a process of intercepting the contents displayed in the first target split-screen interface according to the interface boundary of the first target split-screen interface, a full-screen screenshot of the screen interface may be intercepted, and the contents displayed in the first target split-screen interface may be intercepted according to the interface boundary of the first target split-screen interface, such that the screenshot image of the screenshot-taking operation is obtained.

In some embodiments, the first target split-screen interface includes one or more split-screen interfaces. When the first target split-screen interface includes one split-screen interface, the screenshot image includes contents displayed in the one split-screen interface. When the first target split-screen interface includes all split-screen interfaces in the screen interface, the screenshot image is the full-screen screenshot of the screen interface. That is, in the embodiments of the present disclosure, the screenshot of one split-screen interface, or the screenshot of a plurality of split-screen interfaces, or the full-screen screenshot of the screen interface can be achieved by the screenshot-taking operation.

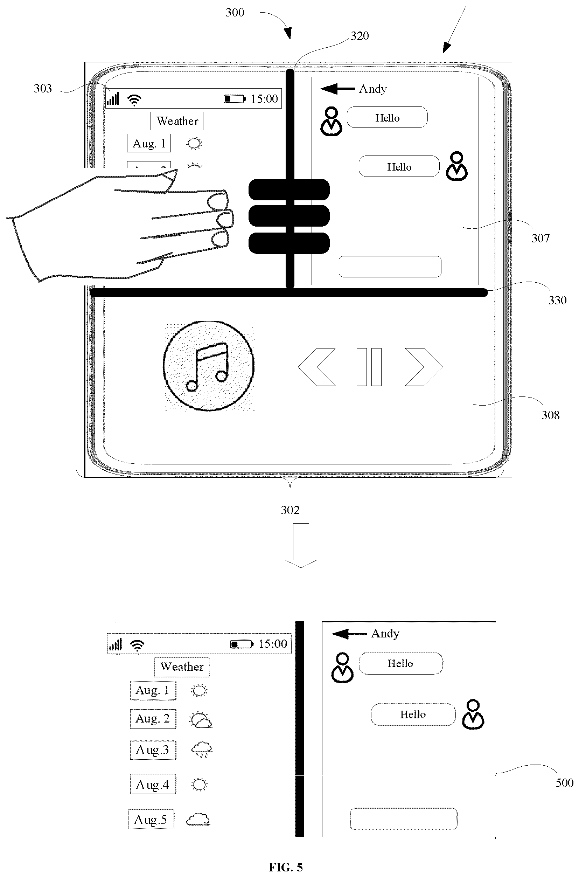

As shown in FIG. 5, FIG. 5 is a schematic view of an image of a taken screenshot according to an embodiment of the present disclosure. As shown in FIG. 5, based on the screenshot-taking operation performed in FIG. 4B, after determining the first split-screen interface 306 and the second split-screen interface 307 as the first target split-screen interface corresponding to the screenshot-taking operation, the interface boundary of the first target split-screen interface may be determined in response to the screenshot-taking operation. The interface boundary of the first target split-screen interface is the interface boundary of the integral split-screen interface formed by combining the first split-screen interface 306 and the second split-screen interface 307. The contents displayed in the first target split-screen interface is intercepted based on the interface boundary of the first target split-screen interface. That is, the screenshot image 500 corresponding to the screenshot-taking operation is generated.

In some embodiments, after generating the screenshot image corresponding to the screenshot-taking operation, the screenshot image may be displayed or stored based on an operation performed by the user.

In some embodiments, when a floating window interface exists above a layer on which the first target split-screen interface is displayed, in the process of generating the screenshot image corresponding to the screenshot-taking operation in response to the screenshot-taking operation, on the one hand only contents displayed in the layer on which the first target split-screen interface is displayed may be intercepted, and that is, the screenshot image does not include contents displayed in the floating window interface. On the other hand, when the floating window interface exists above the layer on which the first target split-screen interface is displayed, it is less costly for the user, before the screenshot-taking operation, to close the floating window interface or move the floating window interface to a region outside a region where the user desires to take a screenshot. Therefore, according to a principle of "what you see is what you get", in the present embodiment, during generating the screenshot image, contents of all different layers that are located within the interface boundary of the first target split-screen interface are intercepted based on the interface boundary of the first target split-screen interface. Therefore, when the floating window interface is located above the layer on which the first target split-screen interface is displayed and the floating window interface overlaps with the first target split-screen interface, a portion of the floating window interface located within the interface boundary of the first target split-screen interface can be intercepted during generating the screenshot image, such that the screenshot image includes contents displayed inside the first target split-screen interface after the first target split-screen interface and the floating window interface are superimposed to each other.

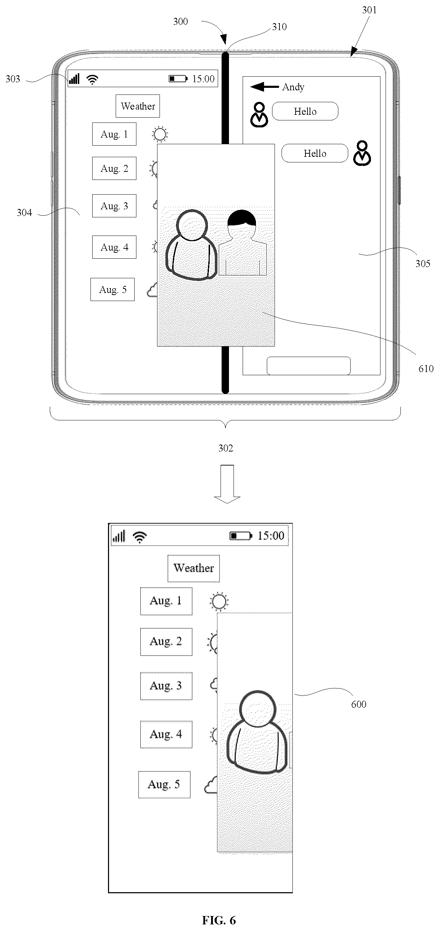

As shown in FIG. 6, FIG. 6 is a schematic view of another image of the taken screenshot according to an embodiment of the present disclosure. As shown in FIG. 6, based on the split-screen interface in FIG. 3A, a floating window interface 610 is displayed above a layer on which the first split-screen interface 304 and the second split-screen interface 305 are displayed, the floating window interface 610 overlaps with both the first split-screen interface 304 and the second split-screen interface 305. In this case, according to the screenshot-taking operation, when it is determined that the first split-screen interface 304 is the first target split-screen interface corresponding to the screenshot-taking operation, the interface boundary of the first target split-screen interface is determined in response to the screenshot-taking operation. The interface boundary of the first target split-screen interface is an interface boundary of the first split-screen interface 304, contents displayed in all layers that are located within the interface boundary of the first split-screen interface 304 are intercepted according to the interface boundary of the first split-screen interface 304, so as to generate the screenshot image 600 corresponding to the screenshot-taking operation. In this case, the screenshot image 600 includes a portion of the floating window interface 610 that is located within the interface boundary of the first split-screen interface 304.

In the related art, in order to take a screenshot for an interface of a certain split-screen, a screenshot of the entire screen interface needs to be taken firstly, to obtain the screenshot of the entire screen interface; subsequently, the screenshot of the entire screen interface is cropped by an image editing tool to obtain the screenshot of the certain split-screen. By contrast, in the present disclosure, one or more split-screen interfaces that need to be taken for screenshots can be determined by the screenshot-taking operation performed on the screen. In this way, the screenshot of one or more split-screen interfaces can be taken without cropping the full-screen screenshot of the terminal. Therefore, in the case that the terminal is displaying contents in split-screens, the screenshot can be taken conveniently, and the screenshot taking efficiency is improved.

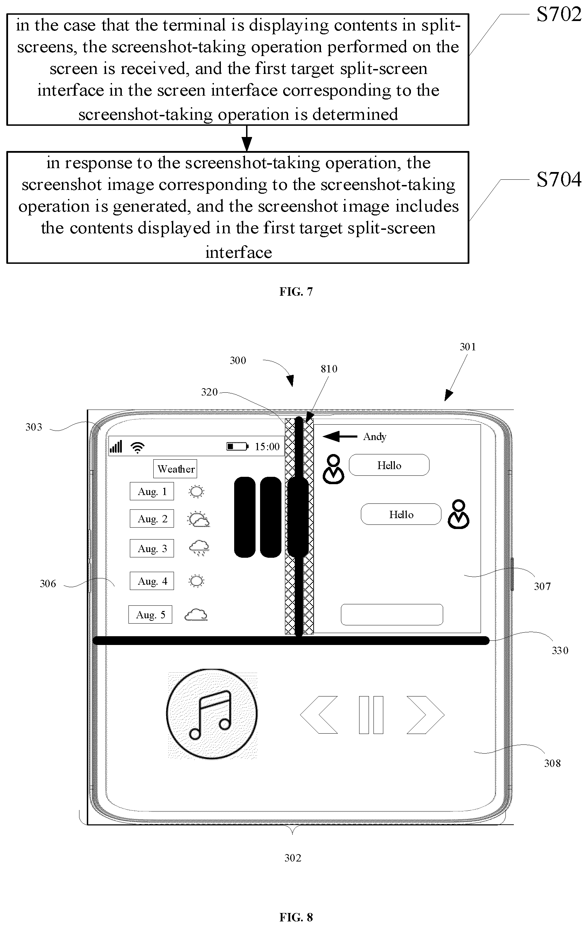

As shown in FIG. 7, FIG. 7 is a flow chart of the method for taking the screenshot according to another embodiment of the present disclosure.

As shown in FIG. 7, the method includes the following.

S702, in the case that the terminal is displaying contents in split-screens, the screenshot-taking operation performed on the screen is received, and the first target split-screen interface in the screen interface corresponding to the screenshot-taking operation is determined.

It is understood that since the screenshot-taking operation may be a continuous touch operation, when the processor in the terminal monitors the screenshot-taking operation being performed on the screen, a screenshot-taking operation that is performed subsequently on the screen is continuously received. In order to facilitate the user to be aware of the screenshot-taking operation performed by the user on the screen, a relevant operation may be performed based on the screenshot-taking operation during receiving the screenshot-taking operation.

In the present embodiment, after continuously receiving the screenshot-taking operation performed on the screen, an operation image corresponding to the screenshot-taking operation is displayed in real time in the screen interface. In this way, the user determines a position of the screenshot-taking operation performed on the screen based on the displayed operation image.

Specifically, at least one operation position of the screenshot-taking operation in the screen interface is obtained, and the operation screen corresponding to the screenshot-taking operation is displayed based on the operation position. The operation screen includes at least one of: an operation starting point, an operation end point, and an operation trajectory. For example, an operation position on the screen interface corresponding to a start of the screenshot-taking operation is obtained, and the operation starting point of the screenshot-taking operation is displayed at the operation position. Another operation position on the screen interface corresponding to an end of the screenshot-taking operation is obtained, and the operation end point of the screenshot-taking operation is displayed at the another operation position. A plurality of operation positions on the screen interface corresponding to a process from the start to end of the screenshot-taking operation are obtained, and the operation trajectory of the screenshot-taking operation are displayed at the plurality of operation positions.

Since the operation image corresponding to the screenshot-taking operation performed by the user is displayed, the user, after observing the operation image, can determine, according to positions at which the operation image is located, whether the split-screen interface corresponding to the screenshot-taking operation is a split-screen interface desired by the user. In this way, the user may modify the screenshot-taking operation, such that accuracy of determining the first target split-screen interface is improved.

In some embodiments, after continuously receiving the screenshot-taking operation performed on the screen, a vibration assembly is controlled to provide vibration feedback based on the screenshot-taking operation. In this way, the user may determine, based on the vibration feedback, the position of the screenshot-taking operation on the screen.

Specifically, an operation parameter of the screenshot-taking operation performed on the screen is obtained. The operation parameter includes at least one of: the operation position and an operation direction. A vibration parameter of the vibration assembly is determined based on the operation parameter, and the vibration assembly is controlled to perform the vibration feedback based on the vibration parameter. That is, in the present disclosure, different operation positions and different operation directions cause the vibration assembly to perform different vibration feedbacks. The user, after being aware of the position of the screenshot-taking operation based on the vibration feedback, determines whether the split-screen interface corresponding to the screenshot-taking operation is the desired split-screen interface. In this way, the user can modify the screenshot-taking operation, and the accuracy of the user determining the first target split-screen interface is improved.

After receiving the screenshot-taking operation performed on the screen, the processor needs to determine the first target split-screen interface in the screen interface corresponding to the screenshot-taking operation, such that the processor may take the screenshot for the first target split-screen interface subsequently. In the case that the terminal is displaying contents in split-screens, the terminal divides the screen interface into the plurality of split-screen interfaces by the at least one split-screen line and the interface boundary of the screen interface. Therefore, when the user performs the screenshot-taking operation for the plurality of split-screen interfaces which are divided from the screen interface, the user firstly determines the display region in the screen interface of the split-screen interface that needs to be taken for the screenshot, the user then performs the screenshot-taking operation in a region corresponding to the display region on the screen. Therefore, the region corresponding to the screenshot-taking operation performed by the user on the screen represents a position of the split-screen interface on the screen interface that needs to be taken for the screenshot. Accordingly, in the present disclosure, the first target split-screen interface corresponding to the screenshot-taking operation performed on the screen interface is determined based on the corresponding operation action region of the screenshot-taking operation on the screen interface.

It is understood that since the screenshot-taking operation can be performed in various forms. The screenshot-taking operation may be a fixed touch operation performed on the screen or a continuous touch operation performed on the screen. Before the touch operation is finished, the touch operation may correspond to a plurality of operation action regions. In order to accurately determine the first target split-screen interface that the user desires to take for the screenshot, the operation action region of the screenshot-taking operation can be defined in advance. In the present embodiment, the operation action region can be determined as at least one of: an operation starting point region, an operation end point region, and an operation trajectory action region. The operation starting point region is an operation action region corresponding to an initial touch operation performed by the user contacting the screen interface. The operation end point region is an operation action region corresponding to a last touch operation performed by the user leaving the screen interface. The operation trajectory action region is an operation action region corresponding to all touch operations between the initial touch operation performed by the user contacting the screen interface and the last touch operation performed by the user leaving the screen interface.

According to the operation action region of the screenshot-taking operation, after receiving the screenshot-taking operation on the screen, the screenshot-taking operation of the user can be continuously monitored to obtain the operation action region corresponding to the screenshot-taking operation on the screen interface. The operation action region has a certain range. The operation action region can be represented according to pixel positions occupied by the screenshot-taking operation in the screen interface. Since the operation action region corresponding to the screenshot-taking operation performed by the user in the screen interface represents the position of the split-screen interface in the screen interface that the user desires to take for the screenshot, the first target split-screen interface corresponding to the screenshot-taking operation in the screen interface can be determined based on the operation action region.

Further, the operation action region of the screenshot-taking operation is a region inside the screen interface, and a display region of each split-screen interface is also a region inside the screen interface. Therefore, when the screenshot-taking operation is an operation performed for one or more split-screen interfaces, the operation action region must cover a part of display regions of the one or more split-screen interfaces. Therefore, after determining the operation action region of the screenshot-taking operation, the operation action area and the display region of each split-screen interface in the screen interface can be compared to each other to determine any split-screen interface having any display region intersecting with the operation action region; and the determined split-screen interface is taken as a sub-split-screen interface, such that the sub-split-screen interface is the split-screen interface that the user desires to take for the screenshot.

Since the number of sub-split screen interfaces may be one or more, in order to facilitate taking one screenshot for all sub-split screen interfaces integrally, an integral split-screen interface formed by the all sub-split screen interfaces is taken as the first target split-screen interface corresponding to the screenshot-taking operation in the screen interface.

It can be understood that, during determining the sub-split-screen interface described above, the display region of each split-screen interface in the screen interface needs to be obtained. The display region of each split-screen interface is defined by each split-screen line in the screen interface and the interface boundary of the screen interface. That is, a positional relationship between various split-screen interfaces is related to a position of the split-screen line. When the user performs a screen splitting operation and fixes each split-screen line, a position of each split-screen line in the screen interface is fixed. Therefore, the display region of each split-screen interface is also fixed.

The position of each split-screen line in the screen interface is expressed according to pixel positions occupied by each split-screen line in the screen interface. The screen interface has the interface boundary. Therefore, the interface boundary of each split-screen interface in the screen interface is determined according to the position of each split-screen line in the screen interface and the interface boundary of the screen interface. That is, a region surrounded by each split-screen line and the interface boundary of the screen interface is the corresponding display region of each split-screen interface in the screen interface.

In practice, when a palm of the user is excessively large, three fingers of the user may not easily operate inside the split-screen lines, i.e., inside the display region corresponding to the split-screen interface in the screen interface. Therefore, according to the position of each split-screen line in the screen interface, the region within the predetermined distance from the split-screen line is determined as the anti-false-touch region. The predetermined distance can be determined according to the actual needs. In this way, the display region of each split-screen interface is defined by the split-screen line in the screen interface, the anti-false-touch region and the interface boundary of the screen interface. That is, the interface boundary of each split-screen interface in the screen interface is determined based on the anti-false-touch region, the position of each split-screen line in the screen interface, and the interface boundary of the screen interface. In this case, the interface boundary of each split-screen interface is a boundary line between the split-screen interface and the anti-false-touch region and between the split-screen interface and the interface boundary of the screen interface. That is, the region surrounded by each split-screen line and the anti-false-touch region and the interface boundary of the screen interface serves as the display region of the split-screen interface in the screen interface. The anti-false-touch region occupies a part of the display interface. In this way, a distance between interface boundaries of two split-screen interfaces is increased, the finger of the user may not easily fall into the display region of the split-screen interface. Therefore, a larger operating space can be provided for the finger of the user.

As shown in FIG. 8, FIG. 8 is a schematic view of performing the screenshot-taking operation according to another embodiment of the present disclosure. As shown in FIG. 8, according to the split-screen interfaces in FIG. 3B, the user slides three fingers on the screen region corresponding to the first split-screen interface 306 to perform the screenshot-taking operation. Although a trajectory range corresponding to the operation action region of the three fingers is partially located at a right side of the split-screen line 320, in the present embodiment, the region within the predetermined distance from the split-screen line is taken as the anti-false-touch region 810. Therefore, although the trajectory range corresponding to the operation action region of the three fingers is at the right side of the split-screen line 320, the trajectory range corresponding to the operation action region of the three fingers does not exceed the anti-false-touch region 810. Therefore, the trajectory range corresponding to the operation action region of the three fingers is not located in the display region of the second split-screen interface 307. In addition, the trajectory range corresponding to the operation action region of the three fingers is partially located in the display region of the first split-screen interface 306, and therefore, the first split-screen interface 306 is determined as the first target split-screen interface.

In some embodiments, after determining the first target split-screen interface corresponding to the screenshot-taking operation in the screen interface, and before finishing the screenshot-taking operation, the first target split-screen interface may be displayed in the screen interface in a predetermined identification manner. The predetermined identification manner includes at least one of: box selection, highlighting, shaking, and color changing. In this way, the user may distinguish, through the predetermined identification manner, the first target split-screen interface from other split-screen interfaces, such that the user may determine whether the target first split-screen interface selected by the user to be taken for the screenshot is the split-screen interface that the user desires to take for the screenshot.

S704, in response to the screenshot-taking operation, the screenshot image corresponding to the screenshot-taking operation is generated, and the screenshot image includes the contents displayed in the first target split-screen interface.

The block S704 may be referred to the block S204, which will not be repeated herein.

In the present embodiment, the first target split-screen interface corresponding to the screenshot-taking operation in the screen interface is determined according to the position of each split-screen line in the screen interface. In this way, the user is facilitated to directly determine the split-screen interface that needs to be taken for the screenshot according to the split-screen line in the screen interface. Therefore, the screenshot can be taken more conveniently in the case that the terminal is displaying contents in split-screens.

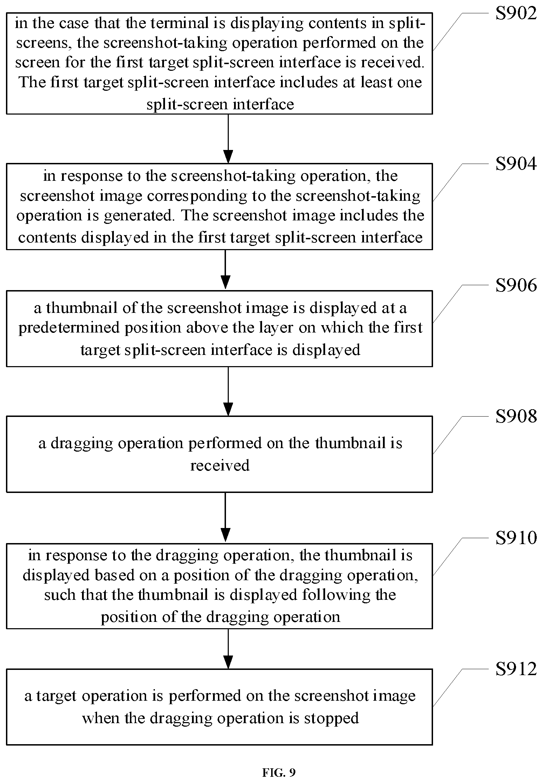

As shown in FIG. 9, FIG. 9 is a flow chart of the method for taking the screenshot according to still another embodiment of the present disclosure.

As shown in FIG. 9, the method includes the following.

S902, in the case that the terminal is displaying contents in split-screens, the screenshot-taking operation performed on the screen for the first target split-screen interface is received. The first target split-screen interface includes at least one split-screen interface.

S904, in response to the screenshot-taking operation, the screenshot image corresponding to the screenshot-taking operation is generated. The screenshot image includes the contents displayed in the first target split-screen interface.

The block S902-S904 may be referred to the blocks S202-S204, which will not be repeated herein.

S906, a thumbnail of the screenshot image is displayed at a predetermined position above the layer on which the first target split-screen interface is displayed.

In an embodiment, after generating the screenshot image corresponding to the screenshot-taking operation, the thumbnail of the screenshot image may be generated. The thumbnail and a virtual button of a processing option for displaying the thumbnail may be displayed at a preset position above the layer on which the first target split-screen interface is displayed. In this way, the user may perform a relevant operation on the screenshot image based on the thumbnail. For example, the screenshot image may be saved, shared, edited, and so on. In addition, during displaying the thumbnail, a screenshot displaying countdown maybe triggered. When the screenshot displaying countdown ends, displaying the thumbnail is canceled.

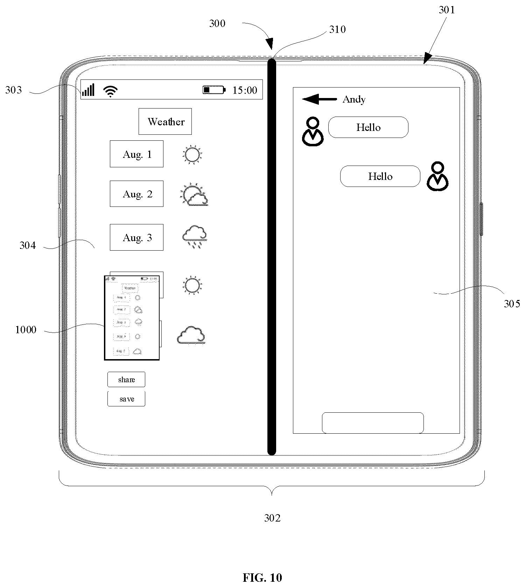

As shown in FIG. 10, FIG. 10 is a schematic view of thumbnails according to another embodiment of the present disclosure. As shown in FIG. 10, based on the split-screen interface in FIG. 3B, when the user takes three fingers to slide on the screen region corresponding to the first split-screen interface 306, equivalent to inputting the screenshot-taking operation on the screen for the first split-screen interface 306, the processor in the terminal may receive the screenshot-taking operation inputted on the screen for the first split-screen interface 306 and determine the first split-screen interface 306 as the first target split-screen interface corresponding to the screenshot-taking operation. The processor may further, in response to the screenshot-taking operation, determine the interface boundary of the first target split-screen interface; intercept the contents displayed in the first target split-screen interface according to the interface boundary of the first target split-screen interface; generate the screenshot image corresponding to the screenshot-taking operation; and display the thumbnail 1000 of the screenshot image at the predetermined position above the layer on which the first target split-screen interface is displayed. A virtual button of the processing option for the thumbnail may be displayed near the thumbnail 1000.

S908, a dragging operation performed on the thumbnail is received.

Since the thumbnail of the screenshot image is located above the layer on which the first target split-screen interface is displayed, the user may select the thumbnail after long-pressing the thumbnail. When selection is completed, the thumbnail may be shaken or vibrate to remind the user to perform the dragging operation. The processor in the terminal may receive the dragging operation performed on the thumbnail.

S910, in response to the dragging operation, the thumbnail is displayed based on a position of the dragging operation, such that the thumbnail is displayed following the position of the dragging operation.

Further, the processor, after receiving the dragging operation performed on the thumbnail, may obtain the position of the dragging operation in response to the dragging operation and display the thumbnail based on the position of the dragging operation. That is, the thumbnail is displayed at the position of the dragging operation to cause the thumbnail to be displayed following the position of the dragging operation. In some embodiments, during dragging the thumbnail, the virtual button of the processing option of the thumbnail may be displayed in an unavailable state. For example, the virtual button of the processing option of the thumbnail may be displayed in gray.

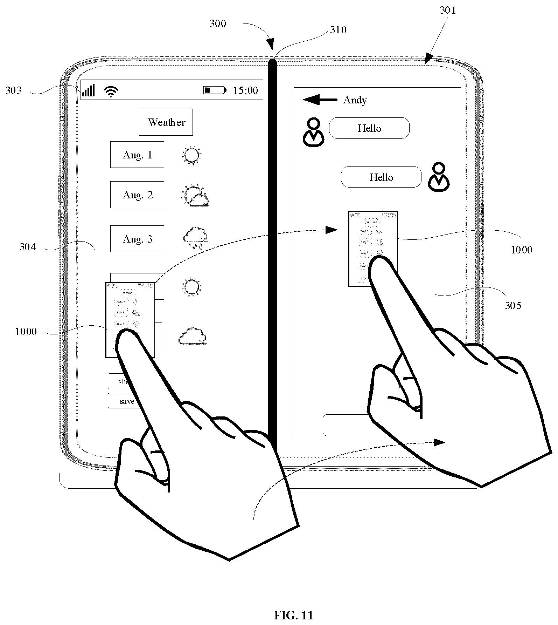

As shown in FIG. 11, FIG. 11 is a schematic view of dragging the thumbnail according to another embodiment of the present disclosure. As shown in FIG. 11, based on the split-screen interfaces in FIG. 3B, after displaying the thumbnail 1000 of the screenshot image at the predetermined position above the layer on which the first target split-screen interface is displayed, the user may use a finger to drag the thumbnail 1000 from one position to another position. The processor may, in response to the dragging operation, obtain the position of the dragging operation and display the thumbnail 1000 at the position of the dragging operation to cause the thumbnail 1000 to be displayed following the position of the dragging operation.

S912, a target operation is performed on the screenshot image when the dragging operation is stopped.

Further, the dragging operation being stopped represents that the user needs to perform the target operation on the screenshot image. Therefore, when the processor monitors that the dragging operation is stopped, the processor firstly determines whether the thumbnail is located at the predetermined position. When the thumbnail is located at the predetermined position, it is represented that the user, after performing the dragging operation on the thumbnail, drags the thumbnail back to an original displaying position of the thumbnail, and that is, the user does not need to perform the relevant operation on the screenshot image. In this case, the thumbnail of the screenshot image remains being displayed at the predetermined position, and the screenshot displaying countdown is triggered to be turned on again. When the screenshot displaying countdown ends, displaying of the thumbnail is canceled. In some embodiments, when the thumbnail of the screenshot images continues being displayed at the predetermined position, the virtual button of the processing option of the thumbnail may be displayed in an available state. For example, the virtual button of the processing option of the thumbnail may be displayed in an original color.

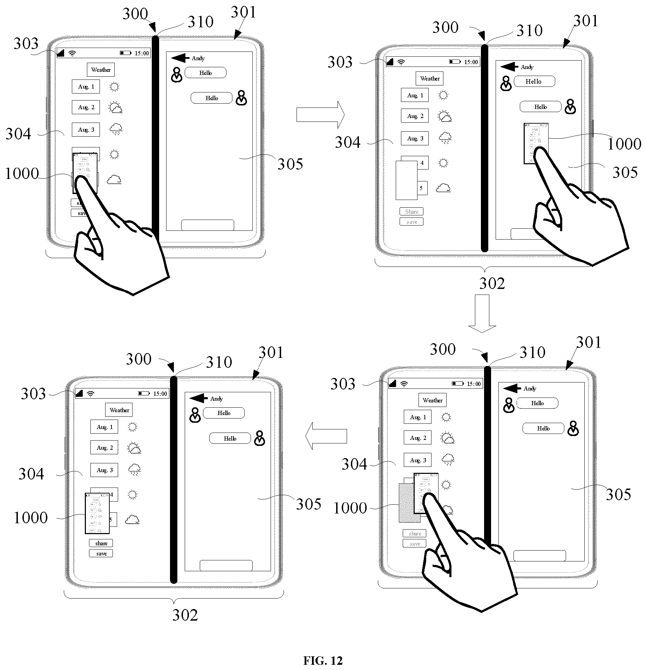

As shown in FIG. 12, FIG. 12 is a schematic view of dragging the thumbnails according to another embodiment of the present disclosure. As shown in FIG. 12, based on the split-screen interfaces in FIG. 3B, after displaying the thumbnail 1000 of the screenshot image at the predetermined position above the layer on which the first target split-screen interface is displayed, the user may use the finger to drag the thumbnail 1000 from one position to another position. The thumbnail 1000 is displayed by following the position of the dragging operation. After the thumbnail 1000 leaves the predetermined position, the predetermined position may be displayed as a first color (the first color may be white in FIG. 10), such that the user may determine the original displaying position of the thumbnail 1000. When the user drags the thumbnail 1000 back to the predetermined position, the predetermined position may be displayed as a second color (the second color may be gray in FIG. 10), which is different from the first color, such that the user is reminded that the operation performed on the thumbnail 1000 can be canceled. When the user completely drags the thumbnail 1000 back to the original displaying position, i.e., the predetermined position, the thumbnail 1000 of the screenshot image may continue being displayed at the predetermined position.

When the thumbnail 1000 is not at the predetermined position, it is indicated that the user needs to perform the relevant operation on the screenshot image after performing the dragging operation on the thumbnail. Therefore, a target image operation needs to be performed on the screenshot image.

Specifically, a corresponding second target split-screen interface when the dragging operation stops may be determined, i.e., the thumbnail is completely within the second target split-screen interface at the time when the dragging operation stops. The second target split-screen interface may be any split-screen interface, and a target application corresponding to the second target split-screen interface may be determined. When the target application is an application that supports image processing, such as a social application or a document editing application, the target image operation is performed on the screenshot image based on the target application, and displaying of the thumbnail of the screenshot image and the virtual button of the processing option of the thumbnail is canceled. The target image operation includes, but is not limited to, sending the screenshot image, editing the screenshot image, and storing the screenshot image.

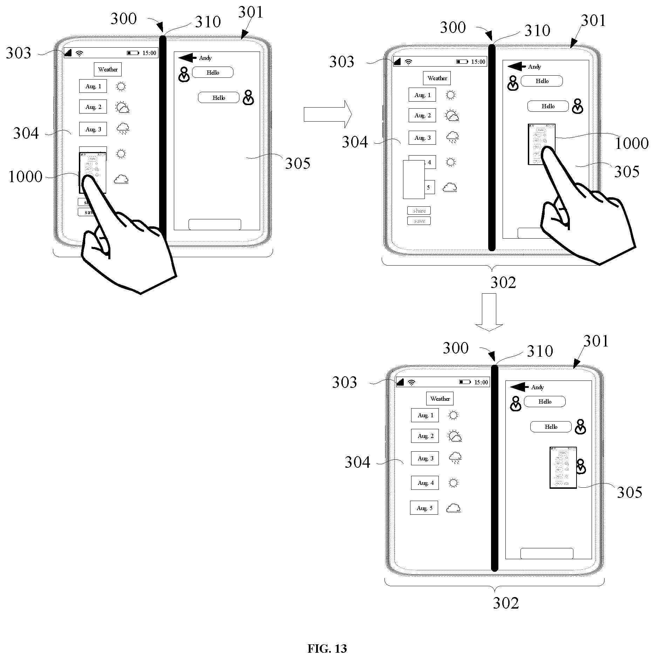

As shown in FIG. 13, FIG. 13 is a schematic view of dragging the thumbnail according to another embodiment of the present disclosure. As shown in FIG. 13, based on the split-screen interfaces in FIG. 3B, in the case that the terminal is displaying contents in split-screens, the application interface of the weather application may be displayed in the first split-screen interface, and a chat window of the WeChat application may be displayed in the second split-screen interface. The user may perform the screenshot-taking operation for the application interface of the weather application in order to generate a screenshot image of the application interface of the weather application and display a thumbnail 1000 of the screenshot image at a predetermined position above the layer on which the split-screen interfaces are displayed. The user may perform the dragging operation on the thumbnail 1000 to move the thumbnail 1000 to the chat window of the WeChat application, and then the user releases the finger to stop moving the thumbnail 1000, such that the WeChat application may send the screenshot image to the chat window.

In another example, in the case that the terminal is displaying contents in split-screens, an application interface of an online shopping application may be displayed in the first split-screen interface, and an editing interface of a sticky note application may be displayed in the second split-screen interface. The user may perform the screenshot-taking operation on the application interface of the online shopping application to generate a screenshot image of the application interface of the online shopping application and display a thumbnail of the screenshot image at a predefined position above the layer on which the split-screen interfaces are displayed. The user may perform the dragging operation on the thumbnail to move the thumbnail to the editing interface of the sticky note application to enable the sticky note application to edit the screenshot image.

When the target application is an application that does not support image processing, for example, when the target application is an audio application or a timing application, a prompt message is provided, the thumbnail is moved to a predetermined position, and the thumbnail of the screenshot image continues being displayed at the predetermined position. The prompt message is configured to prompt the user that the target application does not support image processing. While the thumbnail is being displayed, the screenshot displaying countdown is turned on again. When the screenshot displaying countdown ends, displaying of the thumbnail is canceled. In some embodiments, when the thumbnail of the screenshot image continues being displayed at the predetermined position, the virtual button of the processing option of the thumbnail may continue being displayed in the available state, for example, the virtual button of the processing option of the thumbnail may be displayed in the original color.

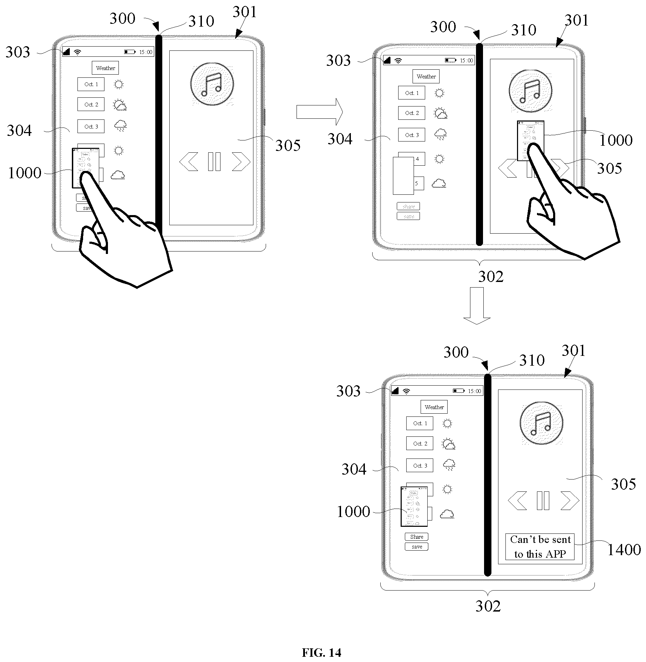

As shown in FIG. 14, FIG. 14 is a schematic view of dragging the thumbnails according to another embodiment of the present disclosure. As shown in FIG. 14, in the case that the terminal is displaying contents in split-screens, the application interface of the weather application may be displayed in the first split-screen interface, and an application interface of a music application may be displayed in the second split-screen interface. The user may perform the screenshot-taking operation on the application interface of the weather application to generate the screenshot image of the application interface of the weather application and display the thumbnail 1000 of the screenshot image at the predetermined position above the layer on which the split-screen interfaces are displayed. The user may perform the dragging operation on the thumbnail 1000 to move the thumbnail 1000 to the application interface of the music application, and then, the user may release the finger to stop moving the thumbnail 1000. Since the music application does not support image processing, a prompt message 1400 may be provided in the screen interface to prompt the user that the music application does not support image processing. The processor may move the thumbnail 1000 to the predetermined position and continue displaying the thumbnail 1000 of the screenshot image at the predetermined position.

In the present disclosure, after generating the screenshot image corresponding to the screenshot-taking operation, the thumbnail of the screenshot image may be displayed at the predetermined position above the layer on which the first target split-screen interface is displayed. The screenshot image may be processed based on the thumbnail. In this way, the screenshot image may be processed more conveniently.

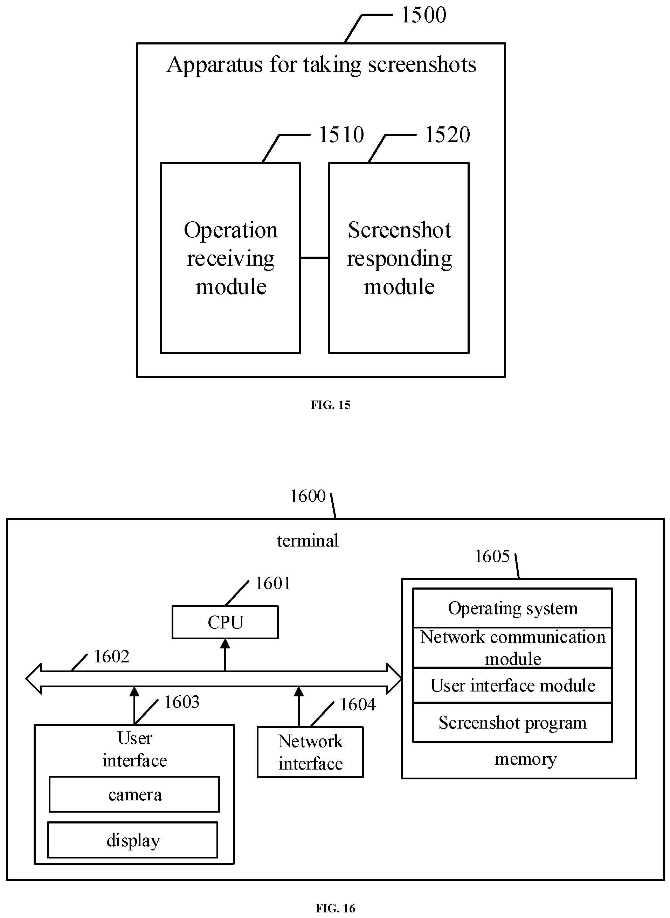

As shown in FIG. 15, FIG. 15 is a structural schematic diagram of an apparatus for taking the screenshot according to another embodiment of the present disclosure.

As shown in FIG. 15, the apparatus 1500 for taking the screenshot is configured in the terminal. In the case that the terminal is displaying contents in split-screens, the screen interface is divided into N split-screen interfaces by at least one split-screen line, and the N is a positive integer greater than 1. Specifically, following components are included.

An operation receiving module 1510 is configured to receive, in the case that the terminal is displaying contents in split-screens, the screenshot-taking operation performed on the screen for the first target split-screen interface. The first target split-screen interface includes at least one split-screen interface.

A screenshot responding module 1520 is configured to generate, in response to the screenshot-taking operation, the screenshot image corresponding to the screenshot-taking operation. The screenshot image includes contents displayed in the first target split-screen interface.

In some embodiments, the operation receiving module 1510 is further configured to: receive the screenshot-taking operation performed on the screen; determine the first target split-screen interface corresponding to the screenshot-taking operation in the screen interface. The screenshot responding module 1520 is further configured to intercept the contents displayed in the first target split-screen interface and generate the screenshot image corresponding to the screenshot-taking operation.

In some embodiments, the apparatus 1500 for taking the screenshot further includes: a displaying module, configured to display the first target split-screen interface in the screen interface in the predetermined identification manner.

In some embodiments, the operation receiving module 1510 is further configured to obtain the operation action region corresponding to the screenshot-taking operation performed on the screen interface; and determine, based on the operation action region, the first target split-screen interface corresponding to the screenshot-taking operation in the screen interface. The operation action region includes at least one of: the operation starting point region, an operation ending point region, and an operation trajectory region.

In some embodiments, the operation receiving module 1510 is further configured to: determine, based on the operation action region and the display region of each split-screen interface in the screen interface, the sub-split-screen interface in each split-screen interface formed by the display region intersecting with the operation action region; and take the integral split-screen interface formed by all sub-split-screen interfaces as the first target split-screen interface corresponding to the screenshot-taking operation in the screen interface.

In some embodiments, the display region of each split-screen interface is defined by the split-screen line in the screen interface and the interface boundary of the screen interface. Alternatively, the display region of each split-screen interface is defined by the split-screen line in the screen interface, the anti-false-touch region, and the interface boundary of the screen interface. The anti-false-touch area is the region within the predetermined distance from the split-screen line.

In some embodiments, when a floating window interface is displayed above the layer on which the first target split-screen interface is displayed, the screenshot image includes contents that is displayed in the first target split-screen interface and is in a superimposed region formed by the first target split-screen interface being superimposed with the floating window interface.

In some embodiments, the apparatus 1500 for taking the screenshot further includes the following.

A thumbnail module is configured to display the thumbnail of the screenshot image at the predetermined position above the layer on which the first target split-screen interface is displayed.

In some embodiments, the thumbnail module is further configured to: receive the dragging operation performed on the thumbnail; display the thumbnail based on the position of the dragging operation in response to the dragging operation, so as to cause the thumbnail to be displayed by follow the position of the dragging operation; and perform the target operation on the screenshot image when the dragging operation is stopped.

In some embodiments, the thumbnail module is further configured to determine whether the thumbnail is located at the predetermined position when the dragging operation is monitored as being stopped. When the thumbnail is at the predetermined position, the thumbnail module is configured to continue displaying the thumbnail of the screenshot image at the predetermined position. When the thumbnail is not located at the predetermined position, the thumbnail module is configured to perform the target image operation on the screenshot image.

In some embodiments, the thumbnail module is further configured to determine the corresponding second target split-screen interface and the target application corresponding to the second target split-screen interface, at the time when the dragging operation is stopped. When the target application is the application that supports image processing, the thumbnail module is configured to perform the target image operation on the screenshot image based on the target application and cancel displaying the thumbnail of the screenshot image. When the target application is the application that does not support image processing, the thumbnail module is configured to provide a prompt message and continue displaying the thumbnail of the screenshot image at the predetermined position. The prompt message is configured to prompt the user that the target application does not support image processing.

In some embodiments, the target image operation includes, but is not limited to, sending the screenshot image, editing the screenshot image, and storing the screenshot image.

In the present disclosure, the apparatus for taking the screenshot includes: the operation receiving module configured to receive, in the case that the terminal is displaying contents in split-screens, the screenshot-taking operation performed on the screen for the first target split-screen interface, where the first target split-screen interface includes at least one split-screen interface; the screenshot responding module configured to generate the screenshot image corresponding to the screenshot-taking operation in response to the screenshot-taking operation, where the screenshot image includes the contents displayed in the first target split-screen interface. One or more split-screen interfaces that need to be taken for screenshots are determined by the screenshot-taking operation performed on the screen, and therefore, the screenshot for the one or more split-screen interfaces can be taken directly without cropping the full-screen screenshot of the terminal. Therefore, in the case that the terminal is displaying contents in split-screens, screenshots can be taken conveniently, and the screenshot taking efficiency is greatly improved.

The present disclosure further provides a computer storage medium, the computer storage medium stores a plurality of instructions, the instructions are configured to be loaded by a processor to perform steps of the method as described in any of the above embodiments.

As shown in FIG. 16, FIG. 16 is a structural schematic diagram of the terminal according to another embodiment of the present disclosure. As shown in FIG. 16, the terminal 1600 may include: at least one central processor 1601, at least one network interface 1604, a user interface 1603, a memory 1605, and at least one communication bus 1602.

The communication bus 1602 is configured to achieve connection and communication between various components.

The user interface 1603 may include a display and a camera. The user interface 1603 may further include a standard wired interface and a wireless interface.

The network interface 1604 may include a standard wired interface and a wireless interface (such as a WI-FI interface).

The central processor 1601 may include one or more processing cores. The central processor 1601 uses various interfaces and lines to connect various components in the entire terminal 1600 to perform various functions and process data of the terminal 1600 by running or executing instructions, programs, code sets, or instruction sets stored in the memory 1605 and by invoking data stored in the memory 1605. In some embodiments, the central processor 1601 may be achieved in at least one form of hardware of: digital signal processing (DSP), a field-programmable gate array (FPGA), a programmable logic array (PLA). The central processor 1601 may integrate one or a combination of: a central processing unit (CPU), a graphics processing unit (GPU), and a modem. The CPU mainly processes an operating system, the user interface and application programs, and so on. The GPU is configured to render and draw contents displayed in the display. The modem is configured to process wireless communication. It is understood that the above modem may not be integrated into the central processor 1601 and may be configured as a chip alone.

The memory 1605 may include a random access memory (RAM) or a read-only memory (ROM). In some embodiments, the memory 1605 includes a non-transitory computer-readable storage medium. The memory 1605 may be configured to store instructions, programs, codes, code sets, or instruction sets. The memory 1605 may include a storage program area and a storage data area. The storage program area may store instructions for implementing the operating system, instructions for at least one function (such as a touch function, a sound playing function, an image displaying function, and so on), instructions for implementing the method in the above embodiments. The storage data area may store data involved in the method in the above embodiments. The memory 1605 may be at least one storage device located away from the above-mentioned central processor 1601. As shown in FIG. 16, the memory 1605, as a computer storage medium, may include an operating system, a network communication module, a user interface module, and a screenshot program.

In the terminal 1600 shown in FIG. 16, the user interface 1603 is substantially configured to provide an input interface for the user and obtain data inputted by the user. The central processor 1601 may be configured to invoke the screenshot program stored in the memory 1605 and specifically perform the following operations.

In the case that the terminal is displaying contents in split-screens, the screenshot-taking operation performed on the screen for the first target split-screen interface is received. The first target split-screen interface includes at least one split-screen interface. In response to the screenshot-taking operation, the screenshot image corresponding to the screenshot-taking operation is generated. The screenshot image includes contents displayed in the first target split-screen interface.

In some embodiments, receiving the screenshot-taking operation performed on the screen for the first target split-screen interface includes: receiving the screenshot-taking operation performed on the screen; determining the first target split-screen interface corresponding to the screenshot-taking operation in the screen interface. Generating the screenshot image corresponding to the screenshot-taking operation includes: intercepting the contents displayed in the first target split-screen interface and generating the screenshot image corresponding to the screenshot-taking operation.

In some embodiments, before the screenshot-taking operation being finished, the method further includes: displaying the first target split-screen interface in the screen interface in the predetermined identification manner.

In some embodiments, determining the first target split-screen interface corresponding to the screenshot-taking operation in the screen interface includes: obtaining the operation action region corresponding to the screenshot-taking operation performed on the screen interface; and determining, based on the operation action region, the first target split-screen interface corresponding to the screenshot-taking operation in the screen interface. The operation action region includes at least one of: the operation starting point region, an operation ending point region, and an operation trajectory region.

In some embodiments, determining, based on the operation action region, the first target split-screen interface corresponding to the screenshot-taking operation in the screen interface includes: determining, based on the operation action region and the display region of each split-screen interface in the screen interface, the sub-split-screen interface in each split-screen interface formed by the display region intersecting with the operation action region; and taking the integral split-screen interface formed by all sub-split-screen interfaces as the first target split-screen interface corresponding to the screenshot-taking operation in the screen interface.

In some embodiments, the display region of each split-screen interface is defined by the split-screen line in the screen interface and the interface boundary of the screen interface. Alternatively, the display region of each split-screen interface is defined by the split-screen line in the screen interface, the anti-false-touch region, and the interface boundary of the screen interface. The anti-false-touch area is the region within the predetermined distance from the split-screen line.

In some embodiments, when a floating window interface is displayed above the layer on which the first target split-screen interface is displayed, the screenshot image includes contents that is displayed in the first target split-screen interface and is in a superimposed region formed by the first target split-screen interface being superimposed with the floating window interface.

In some embodiments, after generating the screenshot image corresponding to the screenshot-taking operation, the method further includes: displaying the thumbnail of the screenshot image at the predetermined position above the layer on which the first target split-screen interface is displayed.

In some embodiments, after displaying the thumbnail of the screenshot image at the predetermined position above the layer on which the first target split-screen interface is displayed, the method further includes: receiving the dragging operation performed on the thumbnail; displaying the thumbnail based on the position of the dragging operation in response to the dragging operation, so as to cause the thumbnail to be displayed by follow the position of the dragging operation; and performing the target operation on the screenshot image when the dragging operation is stopped.

In some embodiments, performing the target operation on the screenshot image when the dragging operation is stopped, includes: determining whether the thumbnail is located at the predetermined position when the dragging operation is monitored as being stopped. When the thumbnail is at the predetermined position, the thumbnail of the screenshot image continues being displayed at the predetermined position. When the thumbnail is not located at the predetermined position, the target image operation is performed on the screenshot image.

In some embodiments, performing the target image operation on the screenshot image includes: determining the corresponding second target split-screen interface and the target application corresponding to the second target split-screen interface, at the time when the dragging operation is stopped. When the target application is the application that supports image processing, the target image operation is performed on the screenshot image based on the target application, and displaying the thumbnail of the screenshot image is canceled. When the target application is the application that does not support image processing, a prompt message is provided, and the thumbnail of the screenshot image continues being displayed at the predetermined position. The prompt message is configured to prompt the user that the target application does not support image processing.

In some embodiments, the target image operation includes, but is not limited to, sending the screenshot image, editing the screenshot image, and storing the screenshot image.

According to the above embodiments of the present disclosure, the disclosed apparatus and methods can be achieved in other ways. For example, the apparatus embodiments described above are merely schematic, for example, division of modules is performed merely based on logical functions. Modules can be divided in other ways in practice. For example, a plurality of modules or components can be combined or can be integrated into another system, or some modules can be omitted or not implemented. Furthermore, mutual coupling or direct coupling or communicative connection shown or discussed may be indirect coupling or communicative connection through some interfaces, devices or modules, which may be electrical, mechanical or the like.

Modules illustrated as separated components may or may not be physically separated from each other. Components shown as modules may or may not be physical modules, i.e., the components may be located in one place, or may be distributed to a plurality of network modules. Some or all of these modules may be selected to fulfill the purpose of the embodiments according to actual needs.

In addition, various functional modules in the various embodiments of the present disclosure may be integrated in one processing module, or the various functional modules may be physically present separately from each other, or two or more modules may be integrated in one module. The above integrated modules may be implemented either in the form of hardware or in the form of software function modules.

The integrated modules may be stored in the computer readable storage medium when implemented in the form of software function modules and sold or used as separate products. Accordingly, technical solutions of the embodiments of the present disclosure, a portion that is essentially or contributes to the prior art, or all or part of the technical solutions may be embodied in the form of a software product, which may be stored in a storage medium and includes a number of instructions to cause a computer device (which may be a personal computer, a server, or a network device, and so on) to perform all or part of the methods in the embodiments of the present disclosure. The storage medium includes: a USB flash drive, a portable hard drive, a read-only memory (ROM), a random access memory (RAM), a magnetic disk, an optical disk, or other media that can store program codes.

It should be noted that, for the sake of simplicity of description, the above method embodiments are all expressed as a series of operations. However, any ordinary skilled person in the art shall understand that the embodiments of the present disclosure are not limited to a sequence of the described operations. Certain operations may be performed in a different order or at the same time according to the embodiments of the present disclosure. In addition, any ordinary skilled person in the art shall understand that the embodiments described in the specification are preferred embodiments, and operations and modules involved herein may not be necessary for the embodiments of the present disclosure.

In the above embodiments, description of the various embodiments has various focuses, and parts that are not described in detail in one embodiment may be referred to relevant description in other embodiments.

The above describes the method and the apparatus for taking the screenshot, the storage medium, and the terminal. Any ordinary skilled person in the art may perform, based on concepts of the embodiments of the present disclosure, changes in specific implementations and application scopes. In summary, contents of the present specification shall not be interpreted as limitation of the embodiments of the present disclosure.

## Claims

1. A method for taking a screenshot, performed by a terminal, wherein, in a case that the terminal is displaying contents in split-screens, a screen interface of the terminal is divided into N split-screen interfaces by at least one split-screen line, and the N is a positive integer greater than 1, the method comprises:
receiving, in the case that the terminal is displaying contents in split-screens, a screenshot-taking operation performed on a screen for a first target split-screen interface, wherein the first target split-screen interface comprises at least one split-screen interface;
generating, in response to the screenshot-taking operation, a screenshot image corresponding to the screenshot-taking operation, wherein the screenshot image comprises contents displayed in the first target split-screen interface.

2. The method according to claim 1, wherein the receiving a screenshot-taking operation performed on a screen for a first target split-screen interface, comprises:
receiving the screenshot-taking operation performed on the screen; determining the first target split-screen interface corresponding to the screenshot-taking operation in the screen interface;
wherein the generating a screenshot image corresponding to the screenshot-taking operation, comprises:
intercepting the contents displayed in the first target split-screen interface and generating the screenshot image corresponding to the screenshot-taking operation.

3. The method according to claim 2, wherein before the screenshot-taking operation being finished, the method further comprises:
displaying the first target split-screen interface in the screen interface in a predetermined identification manner.

4. The method according to claim 2, wherein the determining the first target split-screen interface corresponding to the screenshot-taking operation in the screen interface comprises:
obtaining an operation action region corresponding to the screenshot-taking operation performed on the screen interface, wherein the operation action region comprises at least one of: an operation starting point region, an operation ending point region, and an operation trajectory region; and
determining, based on the operation action region, the first target split-screen interface corresponding to the screenshot-taking operation in the screen interface.

5. The method according to claim 4, wherein the determining, based on the operation action region, the first target split-screen interface corresponding to the screenshot-taking operation in the screen interface, comprises:
determining, based on the operation action region and a display region of each of the N split-screen interfaces in the screen interface, a sub-split-screen interface in each of the N split-screen interfaces, wherein the sub-split-screen interface is formed by the display region intersecting with the operation action region; and
taking an integral split-screen interface formed by all sub-split-screen interfaces of the N split-screen interfaces as the first target split-screen interface corresponding to the screenshot-taking operation in the screen interface.

6. The method according to claim 5, wherein the display region of each of the N split-screen interfaces is defined by a respective one of the at least one split-screen line in the screen interface and an interface boundary of the screen interface; or
the display region of each of the N split-screen interfaces is defined by a respective one of the at least one split-screen line in the screen interface, an anti-false-touch region, and an interface boundary of the screen interface, wherein the anti-false-touch region is a region within a predetermined distance from the respective one of the at least one split-screen line.

7. The method according to claim 1, wherein, when a floating window interface is displayed above a layer on which the first target split-screen interface is displayed, the screenshot image comprises contents that is displayed in the first target split-screen interface and is in a superimposed region formed by the first target split-screen interface being superimposed with the floating window interface.

8. The method according to claim 1, wherein, after the generating a screenshot image corresponding to the screenshot-taking operation, the method further comprises:
displaying a thumbnail of the screenshot image at a predetermined position above a layer on which the first target split-screen interface is displayed;
receiving a dragging operation performed on the thumbnail;
displaying the thumbnail based on a position of the dragging operation in response to the dragging operation, so as to cause the thumbnail to be displayed by following the position of the dragging operation; and
performing a target operation on the screenshot image when the dragging operation is stopped.

9. The method according to claim 8, wherein the performing a target operation on the screenshot image when the dragging operation is stopped, comprises:
determining whether the thumbnail is located at the predetermined position when the dragging operation is monitored as being stopped;
continuing displaying the thumbnail of the screenshot image at the predetermined position when the thumbnail is at the predetermined position; and
performing a target image operation on the screenshot image when the thumbnail is not located at the predetermined position.

10. The method according to claim 9, wherein the performing a target image operation on the screenshot image comprises:
determining a corresponding second target split-screen interface and a target application corresponding to the second target split-screen interface, at the time when the dragging operation is stopped;
performing the target image operation on the screenshot image based on the target application and canceling displaying the thumbnail of the screenshot image, when the target application is an application that supports image processing; wherein the target image operation comprises, but not limited to: sending the screenshot image; editing the screenshot image; and saving the screenshot image; and
providing a prompt message and continuing displaying the thumbnail of the screenshot image at the predetermined position, when the target application is an application that does not support image processing, wherein the prompt message is configured to prompt a user that the target application does not support image processing.

11. An apparatus for taking a screenshot, configured in a terminal, wherein, in a case that the terminal is displaying contents in split-screens, a screen interface of the terminal is divided into N split-screen interfaces by at least one split-screen line, and the N is a positive integer greater than 1, the apparatus comprises:
an operation receiving module, configured to receive, in the case that the terminal is displaying contents in split-screens, a screenshot-taking operation performed on a screen for a first target split-screen interface, wherein the first target split-screen interface comprises at least one split-screen interface;
a screenshot responding module, configured to generate, in response to the screenshot-taking operation, a screenshot image corresponding to the screenshot-taking operation, wherein the screenshot image comprises contents displayed in the first target split-screen interface.

12. The apparatus according to claim 11, wherein the operation receiving module is further configured to receive the screenshot-taking operation performed on the screen; determine the first target split-screen interface corresponding to the screenshot-taking operation in the screen interface; and
the screenshot responding module is configured to intercept the contents displayed in the first target split-screen interface and generate the screenshot image corresponding to the screenshot-taking operation.

13. The apparatus according to claim 12, further comprising a displaying module, configured to display the first target split-screen interface in the screen interface in a predetermined identification manner.

14. The apparatus according to claim 12, wherein the operation receiving module is configured to:
obtain an operation action region corresponding to the screenshot-taking operation performed on the screen interface, wherein the operation action region comprises at least one of: an operation starting point region, an operation ending point region, and an operation trajectory region; and
determine, based on the operation action region, the first target split-screen interface corresponding to the screenshot-taking operation in the screen interface.

15. The apparatus according to claim 14, wherein the operation receiving module is configured to:
determine, based on the operation action region and a display region of each of the N split-screen interfaces in the screen interface, a sub-split-screen interface in each of the N split-screen interfaces, wherein the sub-split-screen interface is formed by the display region intersecting with the operation action region; and
take an integral split-screen interface formed by all sub-split-screen interfaces of the N split-screen interfaces as the first target split-screen interface corresponding to the screenshot-taking operation in the screen interface.

16. The apparatus according to claim 15, wherein the display region of each of the N split-screen interfaces is defined by a respective one of the at least one split-screen line in the screen interface and an interface boundary of the screen interface; or
the display region of each of the N split-screen interfaces is defined by a respective one of the at least one split-screen line in the screen interface, an anti-false-touch region, and an interface boundary of the screen interface, wherein the anti-false-touch region is a region within a predetermined distance from the respective one of the at least one split-screen line.

17. The apparatus according to claim 11, wherein when a floating window interface is displayed above a layer on which the first target split-screen interface is displayed, the screenshot image comprises contents that is displayed in the first target split-screen interface and is in a superimposed region formed by the first target split-screen interface being superimposed with the floating window interface.

18. The apparatus according to claim 11, further comprising:
a thumbnail module, configured to display a thumbnail of the screenshot image at a predetermined position above a layer on which the first target split-screen interface is displayed;
wherein the thumbnail module is further configured to: receive a dragging operation performed on the thumbnail; display the thumbnail based on a position of the dragging operation in response to the dragging operation, so as to cause the thumbnail to be displayed by following the position of the dragging operation; and perform a target operation on the screenshot image when the dragging operation is stopped.

19. A computer storage medium, storing a plurality of instructions, wherein the plurality of instructions are configured to be loaded by a processor to perform operations of the method according to any one of claims 1 to 10.

20. A terminal, comprising a memory, a processor and a computer program stored on the memory and capable of being run on the processor, wherein the processor is configured to execute the computer program to perform the operations of the method according to any one of claims 1 to 10.
